# EUROPÄISCHE PATENTSCHRIFT

(11) **EP 2 544 882 B1**
(45) Veröffentlichungstag und Bekanntmachung des Hinweises auf die Patenterteilung: **06.09.2017**
(21) Anmeldenummer: 11707352.8
(22) Anmeldetag: 09.03.2011
(51) Int. Cl.: B29C 70/44

(54) **VERWENDUNG EINES FLEXIBLEN FLÄCHENMATERIALS ZUR BEGRENZUNG EINES MATRIXMATERIAL-ZUFÜHRRAUMS**
USE OF A FLEXIBLE SHEET-LIKE MATERIAL FOR LIMITING A MATRIX MATERIAL FEED SPACE
UTILISATION D'UN MATÉRIAU PLAT SOUPLE POUR DÉLIMITER UN ESPACE ALIMENTÉ D'UNE MATIÈRE SERVANT DE MATRICE

(30) Priorität: 11.03.2010 DE 102010011067
(43) Veröffentlichungstag der Anmeldung: 16.01.2013
(73) Patentinhaber: Trans-Textil GmbH, 83395 Freilassing (DE); Airbus Defence and Space GmbH, 85521 Ottobrunn (DE)
(72) Erfinder: KRINGS, Wilhelm, 83410 Laufen (DE); HÄNSCH, Manfred, 83404 Ainring (DE); PRIBIL, Leopold, 83454 Aufham (DE); HIERHAMMER, Wilhelm, 86356 Neusäß (DE)
(74) Vertreter: Bauer, Friedrich
(86) Internationale Anmeldenummer: PCT/EP2011/001162
(87) Internationale Veröffentlichungsnummer: WO 2011/110340

(56) Entgegenhaltungen:
- EP-A1- 0 648 889
- EP-A2- 1 010 801
- WO-A1-2004/088019
- DE-A1- 10 253 100
- US-A- 4 210 697
- US-A- 4 702 376
- US-A- 4 758 239
- US-A- 5 665 301

## Beschreibung

Die Erfindung betrifft die Verwendung eines flexiblen Flächenmaterials zur Begrenzung eines Matrixmaterial-Zuführraums bei der Herstellung von faserverstärkten Kunststoffbauteilen aus Faserverbund-Halbzeugen.

Bei der Herstellung von faserverstärkten Kunststoffbauteilen werden bekanntermaßen zunächst trockene Faserverbund-Halbzeuge, sogenannte Preforms, verwendet, die mit fließfähigem, aushärtbarem Matrixmaterial in Form von Harz getränkt werden. Das trockene Faserverbund-Halbzeug kann hierbei als Gewebe, als Multiaxialgelege oder als kettverstärktes unidirektionales Halbzeug vorliegen und besteht insbesondere aus Kohlefasern, Glasfasern, Aramidfasern, Borfasern oder Hybridwerkstoffen.

Ein Verfahren zur Herstellung faserverstärkter Kunststoffbauteile ist als sogenanntes Resin-Film-Infusion (RFI)-Verfahren bekannt. Hierbei wird ein trockenes Kohlefasergewebe oder -gelege in einer Aushärtevorrichtung abgelegt und von außen mit einer definierten Harzfilmmenge belegt. Anschließend wird das aus den Kohlefasern und dem Harz bestehende Kunststoffbauteil in einem Autoklaven oder einem anderen Druckbehältnis unter Druck und Temperatur ausgehärtet. Die Verwendung von Druckbehältnissen und die hierfür notwendigen komplexen Werkzeuge sind jedoch sehr aufwendig. Weiterhin ist ein derartiges Verfahren hinsichtlich Temperaturen und Druck schwer zu handhaben. Die zur Verfügung stehenden Autoklaven begrenzen darüber hinaus die Größe der herzustellenden Kunststoffbauteile.

Um diese Nachteile zu vermeiden, ist bereits ein in der DE 100 13 409 C1 beschriebenes Verfahren entwickelt worden, das als "VAP" (Vacuum Assisted Process, bzw. vakuumunterstütztes Verfahren) bezeichnet wird.

Bei diesem Verfahren wird ein mehrlagiges, flexibles Flächenmaterial verwendet, mit dem ein Matrix-Zuführraum begrenzt wird, in dem das Halbzeug angeordnet ist. Das Flächenmaterial besteht dort aus mehreren voneinander getrennten, unabhängig voneinander zu handhabenden Lagen, nämlich einer gasdurchlässigen, jedoch matrixmaterialundurchlässigen Membran, einer hoch gasdurchlässigen Abstandshalterlage sowie einer gasundurchlässigen Folie. Diese Lagen werden nacheinander einzeln über eine Fließhilfschicht gelegt, die auf das Halbzeug aufgelegt wird. Wird nun der Bereich zwischen der Folie und der Membran evakuiert und dadurch ein Unterdruck aufgebaut, wird durch die Membran hindurch auch im innenliegenden Matrix-Zuführraum der Druck entsprechend abgesenkt, wodurch flüssiges Harz (Matrixmaterial) aus einem externen Harzbehälter in den Matrixmaterial-Zuführraum hinein gesaugt wird. Die Membran ermöglicht hierbei zwar ein Entweichen von Gasen aus dem Matrix-Zuführraum in die Abstandshalterlage hinein und von dort nach außen, hält jedoch gleichzeitig das Harz im Matrixmaterial-Zuführraum zurück, so dass es in das Halbzeug infiltrieren kann.

Obwohl dieses VAP-Verfahren gegenüber den Verfahren, bei denen Autoklaven verwendet werden, beträchtliche Vorteile bringt, besteht ein gewisses Problem darin, dass die einzelnen Lagen des Flächenmaterials, nämlich die Membran, die Abstandshalterlage sowie die gasundurchlässige Folie, nacheinander sehr exakt und spannungsfrei über das Halbzeug gelegt werden müssen. Dies ist entsprechend zeitaufwendig und kann, falls dies nicht exakt durchgeführt wird, die Prozesssicherheit negativ beeinflussen und zu ungleichmäßigen Anhäufungen im Matrixmaterial führen. Diese Probleme werden durch ein Multifunktionslaminat vermieden, das in der DE 10 2008 006 261 B3 beschrieben ist. Dort wird auf die gasdurchlässige, jedoch matrixmaterialundurchlässige Membran eine Textillage auflaminiert und darüber hinaus auch die Abstandshalterlage auf der Textillage fixiert. Die gasundurchlässige Folie kann entweder separat über die Abstandshalterlage gelegt oder fest mit der Abstandshalterlage verbunden werden, wobei im letzteren Fall die Folie auch fester Bestandteil des Multifunktionslaminats ist. Dieses Multifunktionslaminat bringt bereits erhebliche Vorteile in Bezug auf Handhabung, Prozessgenauigkeit und Prozesssicherheit. Bei einem derartigen Mehrlagenlaminat lassen sich jedoch die gewünschten mechanischen Materialeigenschaften sowie die Eigenschaften bezüglich Gasdurchlässigkeit, Matrixmaterialundurchlässigkeit und Temperaturbeständigkeit der Membran und der Textillage häufig nicht auf die gewünschte einfache Weise genau einstellen. Gründe hierfür sind unter anderem, dass sich die vor dem Laminationsprozess vorhandenen Eigenschaften der Membran einerseits und der Textillage andererseits aufgrund des Laminationsprozesses und in Abhängigkeit von Art, Auftragsweise und Menge des verwendeten Klebers zwischen Membran und Textillage beim Laminieren nicht unerheblich ändern können. Als weiterer Nachteil ist anzuführen, dass bei diesen bekannten Ausführungen die Fließfront des Harzes nicht zu beobachten ist, da oben genannte Flächenmaterialien undurchsichtig sind.

Der Erfindung liegt die Aufgabe zugrunde, ein flexibles Flächenmaterial zur Begrenzung eines Matrixmaterial-Zuführraums der eingangs genannten Art zu schaffen, das für das VAP-Verfahren verwendet wird. Weiterhin soll ein Verfahren zur Herstellung eines derartigen flexiblen Flächenmaterials geschaffen werden, mit dem das Flächenmaterial auf möglichst einfache und in Bezug auf seine Eigenschaften hinsichtlich Gasdurchlässigkeit und Matrixmaterialundurchlässigkeit auf besonders genaue Weise herstellbar ist.

Diese Aufgabe wird erfindungsgemäß durch ein Verfahren nach Anspruch 1 und eine Verwendung nach Anspruch 5 gelöst. Vorteilhafte Ausführungsform der Erfindung sind in den Unteransprüchen beschrieben.

Erfindungsgemäß umfasst das flexible Flächenmaterial eine Textillage, die zumindest einseitig mit einer gasdurchlässigen, jedoch matrixmaterialundurchlässigen, als Sperrschicht für das Matrixmaterial wirkenden Funktionsschicht beschichtet ist, die durch Direktbeschichtung der Textillage mit einem Schaum oder einer Paste hergestellt ist.

Gemäß einer vorteilhaften Ausführungsform ist die Textillage ein Gewebe, Gewirke, Gestrick, Vlies oder Filz und besteht zumindest überwiegend aus einem oder mehreren der folgenden Materialien: Polyester, Polyamid, Aramid, Glasfaser, Polyacryl, insbesondere Polyacrylnitril, Polypropylen, Polyethylen, Viskose, Cellulose, Baumwolle.

Diese Textillage wirkt als Träger für die mittels des Direktbeschichtungsverfahrens direkt auf die Textillage aufgebrachte Funktionsschicht, die beim Beschichtungsvorgang eine Schaum- oder Pastenstruktur hat und dem fertigen Flächenmaterial die gewünschten, für das VAP-Verfahren notwendigen Eigenschaften, insbesondere in Bezug auf Gasdurchlässigkeit und Matrixmaterialundurchlässigkeit (Harzundurchlässigkeit), verleiht.

Gemäß einer vorteilhaften Ausführungsform ist die Funktionsschicht aus einem Schaum oder einer Paste hergestellt, der bzw. die aus einer wässrigen Polymer-Dispersion zumindest überwiegend mit einer oder mehreren der folgenden Substanzen hergestellt ist: Polyurethan, Fluorpolymere, insbesondere Polytetrafluorethylen, Acrylat, insbesondere Styrolacrylat, Latex, insbesondere Nitril-Butadien-Latex (NBR) oder Styrol-Butadien-Latex (SBR), Silikon, Copolymerisate, jeweils mit Zuschlagstoffen.

Alternativ hierzu kann die Funktionsschicht auch aus einer Paste hergestellt sein, die aus einem lösemittelhaltigen Polymer zumindest überwiegend mit einer oder mehreren der folgenden Substanzen hergestellt ist: Polyurethan, Fluorpolymere, insbesondere Polytetrafluorethylen, Acrylat, insbesondere Styrolacrylat, Latex, insbesondere Nitril-Butadien-Latex (NBR) oder Styrol-Butadien-Latex (SBR), Ethylenvinylacetat, Polyvinylacetat, Silikon, Copolymerisate der vorstehend genannten Substanzen, jeweils mit Zuschlagstoffen.

Die Textillage kann ein- oder zweiseitig mit der Funktionsschicht beschichtet sein. Vorteilhafterweise ist die Textillage lediglich einseitig mit der Funktionsschicht beschichtet, während auf der gegenüberliegenden Seite der Textillage eine Abstandshalterlage vorgesehen ist, welche eine über der Abstandshalterlage anordenbare, gasundurchlässige Folie auf Abstand zur Textillage hält. Die Abstandshalterlage ist dabei hoch gasdurchlässig und hält, wenn im Zwischenraum zwischen Folie und Textillage ein Unterdruck erzeugt wird, die Folie auf Abstand zur Textillage. Abstandshalterlage und Folie befinden sich somit immer auf derjenigen Seite der Textillage, die dem Matrixmaterial-Zuführraum abgewandt ist.

Es ist auch möglich, dass die Textillage auf ihrer dem Matrixmaterial-Zuführraum abgewandten Seite mit einer mittels des Direktbeschichtungsverfahrens aufgebrachten Abstandshalterlage direkt beschichtet ist. Alternativ hierzu ist es auch möglich, dass die Abstandshalterlage auf die Textillage auflaminiert wird, vor oder nachdem die Textillage auf der gegenüberliegenden Seite mit der Funktionsschicht beschichtet worden ist.

Das erfindungsgemäße flexible Flächenmaterial hat den Vorteil, dass es gegenüber bekannten Flächenmaterialien einfacher und genauer hinsichtlich der gewünschten Eigenschaften, insbesondere hinsichtlich Gasdurchlässigkeit und Matrixmaterialundurchlässigkeit, herstellbar ist. Weiterhin kann das Flächenmaterial ohne weiteres transparent oder halbtransparent ausgebildet werden, wodurch die Harzfließfront beim VAP-Verfahren beobachtet werden kann.

Beim erfindungsgemäßen Verfahren wird die Textillage zumindest einseitig mittels eines Direktbeschichtungsverfahrens mit einer gasdurchlässigen, jedoch eine matrixmaterialundurchlässige Sperrschicht für das Matrixmaterial bildenden Schaum- oder Pastenschicht beschichtet. Für das erfindungsgemäße Verfahren ist es somit charakteristisch, dass die gasdurchlässige, matrixmaterialundurchlässige Funktionsschicht nicht mehr in Form einer getrennt hergestellten Membran auf die Textillage auflaminiert wird, sondern dass eine aus Schaum oder Paste bestehende Funktionsschicht mittels einer Direktbeschichtung auf die Textillage aufgebracht wird, die den Träger für die Schaum- oder Pastenschicht bildet. Mittels dieses Direktbeschichtungsverfahrens können die gewünschten Materialeigenschaften, insbesondere der Grad der Gasdurchlässigkeit und der Matrixmaterialundurchlässigkeit, sehr genau eingestellt werden. Weiterhin bietet das Direktbeschichtungsverfahren Vorteile und größere Variationsmöglichkeiten in der Rezepturgestaltung und bietet weitere Möglichkeiten der Vor- und Nachbehandlung der Textillage, wodurch ebenfalls die Gasdurchlässigkeit und Matrixmaterialundurchlässigkeit des Flächenmaterials gesteuert werden können. Ferner ist es möglich, durch Auswahl entsprechender Beschichtungsmaterialien und Zuschlagstoffe sowie durch ein gezieltes Kalandrieren des aufgebrachten Beschichtungsmaterials das Flächenmaterial transparent oder halbtransparent herzustellen. Hierdurch kann, wie bereits ausgeführt, die Harzfließfront beobachtet werden, wenn das fertige Flächenmaterial beim VAP-Verfahren eingesetzt wird.

Für die beim erfindungsgemäßen Verfahren verwendete Textillage eignen sich, wie bereits vorstehend erwähnt, Gewebe, Gewirke, Gestricke, Vlies oder Filz, das bwz. der zumindest überwiegend aus einem oder mehreren der folgenden Materialien besteht: Polyester, Polyamid, Aramid, Glasfaser, Polyacryl, Polypropylen, Polyethylen, Viskose, Cellulose, Baumwolle. Mischungen der vorgenannten Materialien sind ohne weiteres möglich.

Zur Steuerung der Penetration des Schaums oder der Paste in die Textilware, zur Verbesserung von Haftung, Festigkeit und Abrieb besteht eine große Anzahl von Ausrüstungsmöglichkeiten auf chemischer, chemisch-thermischer, als auch physikalisch maschineller Basis. Beispielsweise kann es zweckmäßig sein, dass die Textillage vor ihrer Beschichtung mittels Additive vorbehandelt wird, die aus wässrigen oder organischen Lösungen hergestellt werden und Imprägnierharze, Tenside, Kieselsol-Derivate, Additive für Materialschutz, Flammschutz, Haftvermittler oder dergleichen umfassen.

Die Applikation des Schaums oder der Paste auf die Textillage kann mittels unterschiedlichster Techniken erfolgen, beispielsweise durch
- Streichtechnik mit Rakelmesser
- Tauchtechnik mit Foulardwalzen
- Druck- oder Rastertechnik mittels Gravurwalzen oder Siebdruckschablonen.
- Gießtechniken (wie z. B. Curtain-Coating)

Nach dem Aufbringen des Schaums oder der Paste auf die Textillage und anschließendem Trocknen bei moderater Temperatur wird die Schaum- oder Pastenschicht zweckmäßigerweise unter erhöhter Temperatur und erhöhtem Druck mittels einer Kalandervorrichtung verdichtet und geglättet, um die Gasdurchlässigkeit und/oder Matrixmaterialundurchlässigkeitseigenschaften des Flächenmaterials gezielt zu beeinflussen. Hierdurch ergeben sich in großem Umfang Steuerungsmöglichkeiten zur Erzielung der gewünschten Materialeigenschaften.

Für die Direktbeschichtung der genannten Textilträgermaterialien werden vorteilhafterweise Schäume auf wässriger Basis, Pasten auf wässriger Basis oder Pasten auf lösemittelhaltiger Basis verwendet. Insbesondere kann die Textillage mit einem Schaum oder einer Paste auf Basis einer wässrigen Polymer-Dispersion beschichtet werden, wobei der Schaum oder die Paste zumindest überwiegend aus einer oder mehreren der folgenden Substanzen besteht: Polyurethan, Fluorpolymere, insbesondere Polytetrafluorethylen, Acrylat, insbesondere Styrolacrylat, Latex, insbesondere Nitril-Butadien-Latex oder Styrol-Butadien-Latex, Ethylenvinylacetat, Polyvinylacetat, Silikon, Copolymerisate der vorgenannten Substanzen. Mischungen der vorgenannten Substanzen sind möglich. Zusätzliche Zuschlagstoffe wie Verschäumer, Entschäumer, Schaumstabilisatoren, Vernetzungsreagenzien, Füllstoffe (u.a. Kaolin, Kreide, Kieselsäurederivate, ...) werden nach Bedarf zugegeben.

Besonders vorteilhaft und vielseitig einsetzbar sind dabei Polyurethan-Schaum- und -Pastenbeschichtungen auf wässriger Dispersionsbasis.

Für die Schaumbeschichtung können Schäume verwendet werden, die entweder mechanisch ("Schlagschaum") oder chemisch ("Treibschaum") hergestellt werden. Als Spezialgebiet der chemischen - eigentlich besser physikalischen - Verschäumung, sei die Herstellung des Schaumes unter Zuhilfenahme sogenannter Microsphären-Kapseln (z. B. Expancel^{®} von Akzo Nobel) erwähnt. Diese Kapseln dehnen sich bei Temperaturerhöhung auf das bis zu 40-fache Volumen aus und bilden in der Matrix eine schaumartige Struktur.

Bei der Verwendung von Pasten bzw. mechanisch hergestelltem Schaum werden zweckmäßigerweise spezielle Additive zur Beeinflussung der Viskosität, sowie Füllstoffe, Pigmente, Vernetzer etc. hinzugefügt, um die gewünschten Eigenschaften zu erhalten. Zusätzlich werden bei der Schaumherstellung zweckmäßigerweise Mittel zur Beeinflussung der Schaumdichte zugegeben.

Bei der Erzeugung von chemisch bzw. thermisch hergestelltem Schaum können ebenfalls spezielle Additive zur Beeinflussung der Viskosität und des Schaumlitergewichts sowie Stabilisatoren, Füllstoffe, Vernetzer etc. hinzugefügt werden.

Nach dem Aufbringen einer derartigen Beschichtung auf die Textillage und anschließendem Trocknen wird die Beschichtung unter bestimmter Temperatur und mit bestimmtem Druck auf Kalanderanlagen verdichtet und geglättet. Hierbei wird die Kalandertemperatur je nach Polymer- und Vernetzungstyp, Verschäumungsgrad, Härtemodul der Dispersion und in Abhängigkeit der sonstigen Additive genau abgestimmt, damit unter dem Aspekt der Gasdurchlässigkeit und Matrixmaterialundurchlässigkeit (Harzdichte) bei der Injektion nach dem VAP-Verfahren optimale Resultate erzielt werden.

Besonders vorteilhaft ist dabei, wenn bei einer Schaumbeschichtung das zu verschäumende Material vor dem Verschäumen eine Viskosität von 5-60 dPas (bevorzugt 35-45 dPas) und beim Aufbringen auf die Textillage ein Schaumgewicht von 100 bis 900 g/l (bevorzugt 200-350 g/l) hat, wobei die Trockenauflage 10-120 g/m² beträgt (bevorzugt 30-40 g/m²).

Bei wässrigen Pasten ist je nach Auftragsverfahren eine Viskosität von 5-160 dPas (bevorzugt 40-100 dPas) vorteilhaft. Beim klassischen Rakelverfahren erweisen sich als besonders vorteilhaft 60-80 dPas. Die Trockenauflage beträgt auch hier 10-120 g/m² (bevorzugt 35-45 g/m²).

Sämtliche im Zusammenhang mit der vorliegenden Erfindung angegebenen Viskositätswerte beziehen sich auf Messungen mit "Haake Viskotester 2 plus", Messkörper 1 bzw. 2.

Wie bereits ausgeführt, können alternativ zu wässrigen Dispersionsschäumen oder -pasten auch Pasten auf der Basis eines lösemittelhaltigen Polymers verwendet werden. In diesem Fall besteht die Paste zumindest überwiegend aus einer oder mehreren der folgenden Substanzen: Polyurethan, Fluorpolymere, insbesondere Polytetrafluorethylen, Acrylat, insbesondere Styrolacrylat, Latex, insbesondere Nitril-Butadien-Latex oder Styrol-Butadien-Latex, Ethylenvinylacetat, Polyvinylacetat, Silikon, Copolymerisate der vorgenannten Substanzen, Mischungen dieser Substanzen. Weiterhin enthält die Paste die nötigen Zuschlagstoffe.

Besonders vorteilhaft ist es dabei, wenn die lösemittelhaltige Paste beim Aufbringen auf die Textillage eine Viskosität von 5-60 dPas (bevorzugt 35-45 dPas) hat, wobei die Trockenauflage 10-120 g/m² beträgt (bevorzugt 40-50 g/m²).

Die Beschichtung der Textillage kann auch mittels einer sogenannten "Koagulationsbeschichtung" oder "Extraktionsbeschichtung" erfolgen.

Bei einem Verfahren der Koagulationsbeschichtung werden auf die Textillage vor ihrer Beschichtung z.B. Elektrolytsalze, chemische Additive oder Ionen-Differenz-Additive zur Herbeiführung von Fällungsreaktionen in der Paste oder im Schaum aufgebracht. Bei einem anderem Verfahren der Koagulationsbeschichtung werden in das Beschichtungsmedium (Paste oder Schaum) z.B. Elektrolytsalze, Additive zur thermosensiblen Fällung oder Ionen-Differenz-Additive zur Herbeiführung von Fällungsreaktionen in die Paste oder in die zu verschäumende Mischung eingebracht. Alternativ oder zusätzlich ist es bei der Koagulationsbeschichtung auch möglich, das beschichtete Flächenmaterial einer anschließenden Nachbehandlung mittels Alkalisieren oder Säureabspaltung aus wässrigen Flotten zu unterziehen, um Porenbildung im Polymerfilm herbeizuführen.

Es ist möglich, dass der Schaum oder die Paste durch eine auftretende Instabilität während des Trocknens auf der Textillage zur Fällung/Koagulation gebracht wird. Eine derartige Instabilität tritt insbesondere aufgrund einer Unverträglichkeit von Einzelbestandteilen des Beschichtungsmaterials bei steigender Temperatur und/oder bei Änderung des pH-Wertes auf.

Bei der Extraktionsbeschichtung enthält die Paste oder das zu verschäumende Material Additive, die durch Nachbehandlung des beschichteten Flächenmaterials aus der Beschichtung wieder partiell oder komplett extrahiert, ausgewaschen oder auf andere Weise herausgelöst werden. Dies ist sowohl durch Nachbehandlung mittels Produkten auf wässriger Basis als auch auf Lösemittelbasis, insbesondere durch Perchlorethylen-Reinigung auf Kontinue-Anlagen, möglich.

Für alle angeführten Direktbeschichtungsverfahren gilt, dass die verwendeten Textilträger auf geeignete Weise vorbehandelt werden können, um bei der anschließenden Direktbeschichtung auf diese vorappretierte Textillage spezielle Effekte zur positiven Beeinflussung von z.B. Koagulation, Mikroporösität, Gasdurchlässigkeit und Harz-Dichtheit auch bei höheren Infiltrationstemperaturen beim VAP-Verfahren zu erzielen. Eine vorteilhafte Vorbehandlung der Textillage besteht aus einer separaten Vorimprägnierung der Textillage mit FC-Harzen zur Hydrophobierung, um ein Eindringen oder auch eine Penetration der Paste bzw. des Schaumes in das Textil zu vermindern.

Die Erfindung wird nachfolgend anhand von zwei Ausführungsbeispielen näher beschrieben, mit denen besonders vorteilhafte Ergebnisse erzielt werden konnten. Im Beispiel 1 wurde ein Textilträger mit einem Schaum auf Basis einer wässrigen Dispersion beschichtet, während im Beispiel 2 ein Textilträger mit einer lösemittelhaltigen Paste beschichtet wurde. In beiden Fällen konnten sehr gute Ergebnisse hinsichtlich Herstellgenauigkeit, Gasdurchlässigkeit und Matrixmaterialundurchlässigkeit des fertigen Flächenmaterials erzielt werden.

### Beispiel 1 (Schaum):

| | |
|---|---|
| Material Textillage: | Gewebe aus Polyester |
| Beschichtungsmaterial | |
| (Schaum): | wässrige Dispersion auf Polyurethanbasis mit Zuschlagstoffen Viskosität des zu verschäumenden Materials: 35-45 dPas |
| | Schaumgewicht: 200-240 g/l |
| | Trockenauflage: 35-40 g/m² |
| Kalandertemperatur beim Vorchintzen des Textils: | 170-200°C, insbesondere 185°C |
| Auftragstechnik: | Rakel- oder Schablonenbeschichtung |
| Schaumtrocknungstemperaturen: | 80-130°C |
| Kalandertemperatur beim Komprimieren: | 170-200°C, insbesondere 180°C |

### Beispiel 2 (Paste) :

| | |
|---|---|
| Material Textillage: | Gewebe aus Polyester |
| Beschichtungsmaterial | |
| (Paste): | Lösung aus Polyurethan mit Zusatzstoffen zur Erzielung einer Mikroporösität durch Koagulation (selektive Trocknung) |
| | Viskosität: 35-45 dPas |
| | Trockenauflage: 40-50 g/m² |
| Kalandertemperatur beim Vorchintzen: | 170-200°C, insbesondere 185°C |
| Auftragstechnik: | Rakel- oder Schablonenbeschichtung |
| Temperatur bei Trocknung/Kondensation: | 20-225°C |
| Kalandertemperatur beim Komprimieren (optional): | 120-190°C |

## Patentansprüche

1. Verfahren zur vakuumunterstützten Herstellung von faserverstärkten Kunststoffbauteilen aus einem Faserverbund-Halbzeug, das in einem Matrixmaterial-Zuführraum angeordnet ist, **dadurch gekennzeichnet, dass** zur Begrenzung des Matrixmaterial-Zuführraums ein flexibles Flächenmaterial verwendet wird, das eine Textillage umfasst, die zumindest einseitig mit einer gasdurchlässigen, jedoch matrixmaterialundurchlässigen, als Sperrschicht für das Matrixmaterial wirkenden Funktionsschicht beschichtet ist, die durch Beschichtung der Textillage mit einem Schaum oder einer Paste hergestellt ist.

2. Verfahren nach Anspruch 1, **dadurch gekennzeichnet, dass** die Textillage ein Gewebe, Gewirke, Gestrick, Vlies oder Filz ist und zumindest überwiegend aus einem oder mehreren der folgenden Materialien besteht:
Polyester
Polyamid
Aramid
Glasfaser
Polyacryl
Polypropylen
Polyethylen
Viskose
Cellulose
Baumwolle.

3. Verfahren nach Anspruch 1 oder 2, **dadurch gekennzeichnet, dass** die Funktionsschicht aus einem Schaum oder einer Paste hergestellt ist, der bzw. die aus einer wässrigen Polymer-Dispersion zumindest überwiegend mit einer oder mehreren der folgenden Substanzen hergestellt ist:
Polyurethan
Fluorpolymere
Acrylat
Styrolacrylat
Nitril-Butadien-Latex
Styrol-Butadien-Latex
Ethylenvinylacetat
Polyvinylacetat
Silikon
Copolymerisate der vorgenannten Substanzen, zuzüglich Zuschlagstoffen.

4. Verfahren nach Anspruch 1 oder 2, **dadurch gekennzeichnet, dass** die Funktionsschicht aus einer Paste hergestellt ist, die aus einem lösemittelhaltigen Polymer zumindest überwiegend mit einer oder mehreren der folgenden Substanzen hergestellt ist:
Polyurethan
Fluorpolymere
Acrylat
Styrolacrylat
Nitril-Butadien-Latex
Styrol-Butadien-Latex
Ethylenvinylacetat
Polyvinylacetat
Silikon
Copolymerisate der vorgenannten Substanzen, zuzüglich Zuschlagsstoffen.

5. Verwendung eines flexiblen Flächenmaterials für die Begrenzung eines Matrixmaterial-Zuführraums bei der vakuumunterstützten Herstellung von faserverstärkten Kunststoffbauteilen aus einem Faserverbund-Halbzeug, **dadurch gekennzeichnet, dass** das flexible Flächenmaterial eine Textillage umfasst, die zumindest einseitig mittels eines Beschichtungsverfahren mit einer gasdurchlässigen, jedoch eine matrixmaterialundurchlässige Sperrschicht für das Matrixmaterial bildenden Schaumschicht oder Pastenschicht beschichtet worden ist.

6. Verwendung des flexiblen Flächenmaterials nach Anspruch 5, **dadurch gekennzeichnet, dass** die Schaum- oder Pastenschicht unter erhöhter Temperatur und erhöhtem Druck mittels einer Kalandervorrichtung verdichtet worden ist, um die Gasdurchlässigkeits- und/oder Matrixmaterialundurchlässigkeitseigenschaften des Flächenmaterials gezielt zu beeinflussen.

7. Verwendung des flexiblen Flächenmaterials nach Anspruch 5 oder 6, **dadurch gekennzeichnet, dass** die Textillage mit einem Schaum oder einer Paste auf der Basis einer wässrigen Polymer-Dispersion beschichtet worden ist, wobei der Schaum oder die Paste zumindest überwiegend aus einer oder mehreren der folgenden Substanzen hergestellt ist:
Polyurethan
Fluorpolymere
Acrylat
Styrolacrylat
NBR
SBR
Ethylenvinylacetat
Polyvinylacetat
Silikon
Copolymerisate der vorgenannten Substanzen, zuzüglich Zuschlagstoffen.

8. Verwendung des flexiblen Flächenmaterials nach Anspruch 7, **dadurch gekennzeichnet, dass** der Schaum beim Aufbringen auf die Textillage ein Schaumgewicht von 100-900 g/l hat, wobei die Trockenauflage 10-120 g/m² beträgt.

9. Verwendung des flexiblen Flächenmaterials nach Anspruch 7 oder 8, **dadurch gekennzeichnet, dass** der Schaum beim Aufbringen auf die Textillage ein Schaumgewicht von 200-350 g/l hat, wobei die Trockenauflage 30-40 g/m² beträgt.

10. Verwendung des flexiblen Flächenmaterials nach Anspruch 7, **dadurch gekennzeichnet, dass** die Textillage mit einer wässrigen Paste beschichtet worden ist, deren Trockenauflage 10-120 g/m² beträgt.

11. Verwendung des flexiblen Flächenmaterials nach Anspruch 7 oder 10, **dadurch gekennzeichnet, dass** die Textillage mit einer wässrigen Paste beschichtet worden ist, deren Trockenauflage 35-45 g/m² beträgt.

12. Verwendung des flexiblen Flächenmaterials nach Anspruch 5 oder 6, **dadurch gekennzeichnet, dass** die Textillage mit einer Paste auf der Basis eines lösemittelhaltigen Polymers beschichtet worden ist, wobei die Paste zumindest überwiegend aus einer oder mehreren der folgenden Substanzen hergestellt ist:
Polyurethan
Fluorpolymere
Acrylat
Styrolacrylat
Nitril-Butadien-Latex Styrol-Butadien-Latex
Ethylenvinylacetat
Polyvinylacetat
Silikon
Copolymerisate der vorgenannten Substanzen, zuzüglich Zuschlagstoffen.

13. Verwendung des flexiblen Flächenmaterials nach Anspruch 12, **dadurch gekennzeichnet, dass** die Textillage mit einer lösemittelhaltigen Paste beschichtet worden ist, deren Trockenauflage 10-120 g/m² beträgt.

14. Verwendung des flexiblen Flächenmaterials nach Anspruch 12 oder 13, **dadurch gekennzeichnet, dass** die Textillage mit einer lösemittelhaltigen Paste beschichtet worden ist, deren Trockenauflage 40-50 g/m² beträgt.

15. Verwendung des flexiblen Flächenmaterials nach einem der Ansprüche 5 bis 14, **dadurch gekennzeichnet, dass** die Textillage vor ihrer Beschichtung mittels Additive vorbehandelt worden ist, die aus wässrigen oder organischen Lösungen hergestellt sind und eine oder mehrere der folgenden Substanzen umfassen:
Fluorcarbonharze
Imprägnierharze
Tenside
Kieselsol-Derivate
Haftvermittler.

16. Verwendung des flexiblen Flächenmaterials nach einem der Ansprüche 5 bis 15, **gekennzeichnet durch** eine Koagulationsbeschichtung der Textillage mit einer wässrigen Dispersionspaste, einem Schaum oder lösemittelbasierten Paste, wobei auf die Textillage vor ihrer Beschichtung Elektrolytsalze, chemische Additive oder Ionen-Differenz-Additive zur Herbeiführung von Fällungsreaktionen im Beschichtungsmaterial aufgebracht worden sind.

17. Verwendung des flexiblen Flächenmaterials nach einem der Ansprüche 5 bis 15, **gekennzeichnet durch** eine Koagulationsbeschichtung der Textillage mit einer wässrigen Dispersionspaste, einem Schaum oder lösemittelbasierten Paste, wobei das beschichtete Flächenmaterial einer anschließenden Nachbehandlung mittels Alkalisieren oder Säureabspaltung aus wässrigen Flotten unterzogen worden ist, um Porosität im Polymerfilm zu erzeugen.

18. Verwendung des flexiblen Flächenmaterials nach einem der Ansprüche 5 bis 15, **gekennzeichnet durch** eine Extraktionsbeschichtung der Textillage mit einer wässrigen Dispersionspaste, einem Schaum oder lösemittelbasierten Paste, wobei das Beschichtungsmaterial Additive enthält, die durch Nachbehandlung des beschichteten Flächenmaterials aus dem Beschichtungsmaterial wieder partiell oder komplett extrahiert worden sind.

19. Verwendung des flexiblen Flächenmaterials nach einem der Ansprüche 5 bis 17, **dadurch gekennzeichnet, dass** der Schaum oder die Paste thermosensibel auf der Textillage zur Fällung / Koagulation gebracht worden ist.

20. Verwendung des flexiblen Flächenmaterials nach einem der Ansprüche 5 bis 17, **dadurch gekennzeichnet, dass** der Schaum oder die Paste durch eine auftretende Instabilität während des Trocknens auf der Textillage zur Fällung / Koagulation gebracht worden ist.

## Claims

1. Process for the vacuum assisted production of fibre-reinforced plastics material components from composite fibre semi-finished products which are arranged in a matrix material feed space, **characterised in that** a flexible sheet-like material is used for defining the matrix material feed space, which flexible sheet-like material comprises a textile layer which is coated on at least one side with a function layer which is permeable to gas but impermeable to matrix material, acts as a barrier layer for the matrix material and is produced by coating the textile layer with a foam or a paste.

2. Process according to claim 1, **characterised in that** the textile layer is a woven fabric, an interlaced fabric, a knitted fabric, a non-woven fabric or a felt and at least mainly consists of one or more of the following materials:
polyester, polyamide, aramid, glass fibres, polyacrylic, polypropylene, polyethylene, viscose, cellulose, cotton.

3. Process according to either claim 1 or claim 2, **characterised in that** the function layer is produced from a foam or a paste which is produced from an aqueous polymer dispersion with at least mainly one or more of the following substances:
polyurethane, fluoropolymers, acrylate, styrene acrylate, nitrile-butadiene latex, styrenebutadiene latex, ethylene vinyl acetate, polyvinyl acetate, silicone, copolymers of the above-mentioned substances, further additives.

4. Process according to either claim 1 or claim 2, **characterised in that** the function layer is produced from a paste which is produced from a solvent-containing polymer with at least mainly one or more of the following substances:
polyurethane, fluoropolymers, acrylate, styrene acrylate, nitrile-butadiene latex, styrenebutadiene latex, ethylene vinyl acetate, polyvinyl acetate, silicone, copolymers of the above-mentioned substances, further additives.

5. Use of a flexible sheet-like material for defining a matrix material feed space in the vacuum assisted production of fibre-reinforced plastics material components from composite fibre semi-finished products, **characterized in that** the flexible sheet-like material comprises a textile layer which is coated on at least one side by a coating process with a gas-permeable but matrix material-impermeable foam layer or paste layer which forms a barrier layer for the matrix material.

6. Use of the flexible sheet-like material according to claim 5, **characterised in that** the foam layer or paste layer is compressed by a calendering device at elevated temperature and elevated pressure to influence in a targeted manner the gas-permeability and/or matrix material- impermeability characteristics of the sheet-like material.

7. Use of the flexible sheet-like material according to either claim 5 or claim 6, **characterised in that** the textile layer is coated with a foam or a paste based on an aqueous polymer dispersion, the foam or paste being produced at least mainly from one or more of the following substances:
polyurethane, fluoropolymers, acrylate, styrene acrylate, NBR, SBR, ethylene vinyl acetate, polyvinyl acetate, silicone, copolymers of the above-mentioned substances, further additives.

8. Use of the flexible sheet-like material according to claim 7, **characterised in that** when applied to the textile layer, the foam has a weight of 100 - 900 g/l, the dry layer weight being 10-120 g/m².

9. Use of the flexible sheet-like material according to either claim 7 or 8, **characterised in that** when applied to the textile layer, the foam has a weight of 200 - 350 g/l, the dry layer weight being 30 - 40 g/m².

10. Use of the flexible sheet-like material according to claim 7, **characterised in that** the textile layer is coated with an aqueous paste, the dry layer weight thereof being 10 - 120 g/m².

11. Use of the flexible sheet-like material according to either claim 7 or claim 10, **characterised in that** the textile layer is coated with an aqueous paste, the dry layer weight thereof being 35 - 45 g/m².

12. Use of the flexible sheet-like material according to either claim 5 or claim 6, **characterised in that** the textile layer is coated with a paste based on a solvent-containing polymer, the paste being produced at least mainly from one or more of the following substances:
polyurethane, fluoropolymers, acrylate, styrene acrylate, nitrile-butadiene latex, styrenebutadiene latex, ethylene vinyl acetate, polyvinyl acetate, silicone, copolymers of the above-mentioned substances, further additives.

13. Use of the flexible sheet-like material according to claim 12, **characterised in that** the textile layer is coated with a solvent-containing paste, the dry layer weight thereof being 10 - 120 g/m².

14. Use of the flexible sheet-like material according to either claim 12 or claim 13, **characterised in that** the textile layer is coated with a solvent-containing paste, the dry layer weight thereof being 40 - 50 g/m².

15. Use of the flexible sheet-like material according to any one of claims 5 to 14, **characterised in that** before the textile layer is coated, it is pretreated with additives which are produced from aqueous or organic solutions and comprise one or more of the following substances:
fluorocarbon resins, impregnating resins, surfactants, silica sol derivatives, bonding agents.

16. Use of the flexible sheet-like material according to any one of claims 5 to 15, **characterised by** a coagulation coating of the textile layer with an aqueous dispersion paste, a foam or a solvent-based paste, and before the textile layer is coated, electrolyte salts, chemical additives or ionic differential additives are applied thereon to produce precipitation reactions in the coating material.

17. Use of the flexible sheet-like material according to any one of claims 5 to 15, **characterised by** a coagulation coating of the textile layer with an aqueous dispersion paste, a foam or a solvent-based paste, the coated sheet-like material being subjected to a subsequent aftertreatment by alkalisation or acid elimination from aqueous liquors to produce a porosity in the polymer film.

18. Use of the flexible sheet-like material according to any one of claims 5 to 15, **characterised by** an extraction coating of the textile layer with an aqueous dispersion paste, a foam or a solvent-based paste, the coating material containing additives which are partly or completely extracted again from the coating material by an aftertreatment of the coated sheet-like material.

19. Use of the flexible sheet-like material according to any one of claims 5 to 17, **characterised in that** the foam or paste is brought to precipitation/coagulation thermo-sensitively on the textile layer.

20. Use of the flexible sheet-like material according to any one of claims 5 to 17, **characterised in that** the foam or paste is brought to precipitation/coagulation due to an instability which arises during drying on the textile layer.

## Revendications

1. Procédé pour la fabrication assistée sous vide de composants en matière plastique renforcée par des fibres à partir d'un produit semi-fini composite à base de fibres, qui est agencé dans une chambre d'introduction pour matériau de matrice, **caractérisé en ce que**, pour limiter la chambre d'introduction pour matériau de matrice, on utilise un matériau surfacique flexible qui inclut une couche textile, laquelle est revêtue au moins d'un côté d'une couche fonctionnelle perméable aux gaz, mais imperméable au matériau de matrice, à titre de couche de blocage pour le matériau de matrice, et qui est réalisée par revêtement de la couche textile avec une mousse ou avec une pâte.

2. Procédé selon la revendication 1, **caractérisé en ce que** la couche textile est un tissu, un tricot, un non-tissé ou un feutre, et est au moins majoritairement constituée de l'un ou de plusieurs des matériaux suivants :
polyester
polyamide
aramide
fibres de verre
polyacryl
polypropylène
polyéthylène
viscose
cellulose
coton.

3. Procédé selon la revendication 1 ou 2, **caractérisé en ce que** la couche fonctionnelle est produite à partir d'une mousse ou d'une pâte qui est produite à partir d'une dispersion de polymère aqueuse et au moins en majeure partie avec l'une ou plusieurs des substances suivantes :
polyuréthane
polymère fluoré
acrylate
acrylate de styrène
latex nitrile-butadiène
latex styrène-butadiène
acétate éthylène vinyle
acétate de polyvinyle
silicone
copolymères des substances précitées, avec addition d'agents additifs.

4. Procédé selon la revendication 1 ou 2, **caractérisé en ce que** la couche fonctionnelle est produite à partir d'une pâte qui est fabriquée à partir d'un polymère contenant un solvant et au moins majoritairement avec une ou plusieurs des substances suivantes :
polyuréthane
fluoropolymère
acrylate
acrylate de styrène
latex nitrile-butadiène
latex styrène-butadiène
acétate éthylène-vinyle
acétate de polyvinyle
silicone
copolymères des substances précitées, avec addition d'agents additifs.

5. Utilisation d'un matériau surfacique flexible pour la limitation d'une chambre d'admission pour matériau de matrice lors de la fabrication assistée sous vide de composants en matière plastique renforcée par des fibres à partir d'un produit semi-fini en composite à base de fibres, **caractérisée en ce que** le matériau surfacique flexible inclut une couche textile, qui a été revêtue au moins sur un côté et au moyen d'un processus de revêtement, d'une couche de mousse ou d'une couche de pâte perméable aux gaz formant vis-à-vis du matériau de matrice une couche de blocage imperméable au matériau de matrice.

6. Utilisation du matériau surfacique flexible selon la revendication 5, **caractérisée en ce que** la couche de mousse ou de pâte a été comprimée sous haute température et haute pression au moyen d'un dispositif de calandrage afin d'influencer de façon ciblée les propriétés de perméabilité aux gaz et/ou d'imperméabilité au matériau de matrice du matériau surfacique.

7. Utilisation du matériau surfacique flexible selon la revendication 5 ou 6, **caractérisée en ce que** la couche textile est revêtue avec une mousse ou une pâte à base d'une dispersion de polymère aqueuse, et la mousse ou la pâte est fabriquée au moins en majeure partie de l'une ou de plusieurs des substances suivantes :
polyuréthane
fluoropolymère
acrylate
acrylate de styrène
NBR
SBR
acétate éthylène-vinyle
acétate de polyvinyle
silicone
copolymères des substances précitées, avec addition d'agents additifs.

8. Utilisation du matériau surfacique flexible selon la revendication 7, **caractérisée en ce que** lors de l'application sur la couche textile la mousse a un poids de 100 à 900 g/l, et l'application à sec s'élève de 10 à 120 g/m².

9. Utilisation du matériau surfacique flexible selon la revendication 7 ou 8, **caractérisée en ce que** lors de l'application sur la couche textile, la mousse a un poids de 200 à 350 g/l, et l'application à sec s'élève de 30 à 40 g/m².

10. Utilisation du matériau surfacique flexible selon la revendication 7, **caractérisée en ce que** la couche textile a été revêtue avec une pâte aqueuse dont l'application à sec s'élève de 10 à 120 g/m².

11. Utilisation du matériau surfacique flexible selon la revendication 7 ou 10, **caractérisée en ce que** la couche textile a été revêtue avec une pâte aqueuse dont l'application à sec s'élève de 35 à 45 g/m².

12. Utilisation du matériau surfacique flexible selon la revendication 5 ou 16, **caractérisé en ce que** la couche textile a été revêtue avec une pâte à base d'un polymère contenant un solvant, ladite pâte étant fabriquée au moins en majeure partie à partir de l'une ou de plusieurs des substances suivantes :
polyuréthane
fluoropolymère
acrylate
acrylate de styrène
latex nitrile-butadiène
latex styrène-butadiène
acétate éthylène-vinyle
acétate de polyvinyle
silicone
copolymères des substances précitées, avec addition d'agents additifs.

13. Utilisation du matériau surfacique flexible selon la revendication 12, **caractérisée en ce que** la couche textile a été revêtue avec une pâte contenant un solvant, dont l'application à sec s'élève de 10 à 120 g/m².

14. Utilisation du matériau surfacique flexible selon la revendication 12 ou 13, **caractérisée en ce que** la couche textile a été revêtue avec une pâte contenant un solvant, dont l'application à sec s'élève de 40 à 50 g/m².

15. Utilisation du matériau surfacique flexible selon l'une des revendications 5 à 14, **caractérisée en ce que**, avant revêtement, la couche textile a été préalablement traitée au moyen d'additifs, qui sont fabriqués à partir de solution aqueuse ou organique et qui inclut l'une ou plusieurs des substances suivantes :
résines fluorocarbonées
résines d'imprégnation
agents tensioactifs
dérivés de sol de silice
agents favorisant l'adhésion.

16. Utilisation du matériau surfacique flexible selon l'une des revendications 5 à 15, **caractérisée par** un revêtement par coagulation de la couche textile avec une pâte de dispersion aqueuse, une mousse ou une pâte à base de solvant, dans laquelle des sels électrolytes, des additifs chimiques ou des additifs à différence ionique ont été appliqués sur la couche textile avant son revêtement pour provoquer des réactions de précipitation dans le matériau de revêtement.

17. Utilisation du matériau surfacique flexible selon l'une des revendications 5 à 15, **caractérisée par** un revêtement par coagulation de la couche textile avec une pâte de dispersion aqueuse, une mousse ou une pâte à base de solvant, dans laquelle le matériau surfacique revêtu a été soumis à un traitement successif par alcalisation ou séparation acide à partir de saumures aqueuses, afin d'engendrer une porosité dans le film de polymère.

18. Utilisation du matériau surfacique flexible selon l'une des revendications 5 à 15, **caractérisée par** un revêtement par extraction de la couche textile avec une pâte de dispersion aqueuse, une mousse ou une pâte à base de solvant, dans laquelle le matériau de revêtement contient des additifs qui ont été à nouveau partiellement ou complètement extraits hors du matériau de revêtement par traitement successif du matériau surfacique revêtu.

19. Utilisation du matériau surfacique flexible selon l'une des revendications 5 à 17, **caractérisée en ce que** la mousse ou la pâte a été amenée à une précipitation/coagulation par sensibilisation thermique sur la couche textile.

20. Utilisation du matériau surfacique flexible selon l'une des revendications 5 à 17, **caractérisée en ce que** la mousse ou la pâte a été amenée à une précipitation/coagulation sur la couche textile par une instabilité qui se produit pendant le séchage.
